(19) Europäisches Patentamt
European Patent Office
Office européen des brevets

(11) **EP 2 190 094 B1**

(12) **EUROPÄISCHE PATENTSCHRIFT**

(45) Veröffentlichungstag und Bekanntmachung des Hinweises auf die Patenterteilung:
**27.02.2019   Patentblatt 2019/09**

(51) Int Cl.:
*H02J 1/00* <sup>(2006.01)</sup>    *H04L 12/10* <sup>(2006.01)</sup>
*H04L 12/40* <sup>(2006.01)</sup>    *H02J 7/34* <sup>(2006.01)</sup>

(21) Anmeldenummer: **09173519.1**

(22) Anmeldetag: **20.10.2009**

(54) **Verfahren zum Bereitstellen von Strom für Verbraucher in einem Busgerät sowie Vorschalteinrichtung**

Method for providing electricity to the consumer in a bus and preswitching device

Procédé de préparation de courant pour consommateurs dans un appareil de bus et dispositif d'entrée

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.11.2008   DE 102008058296**

(43) Veröffentlichungstag der Anmeldung:
**26.05.2010   Patentblatt 2010/21**

(73) Patentinhaber: **Siemens Schweiz AG**
**8047 Zürich (CH)**

(72) Erfinder:
• **Fichtner, Norbert**
**84069, Schierling (DE)**
• **Günther, Harald**
**90537, Feucht (DE)**
• **Munz, Dieter**
**91315, Höchstadt (DE)**

(74) Vertreter: **Maier, Daniel Oliver et al**
**Siemens AG**
**Postfach 22 16 34**
**80506 München (DE)**

(56) Entgegenhaltungen:
**WO-A1-2007/130017     US-A1- 2004 201 931**
**US-B1- 6 788 036**

**Beschreibung**

Die Erfindung betrifft ein Verfahren zum Bereitstellen von Strom für Verbraucher in einem Busgerät nach dem Oberbegriff von Patentanspruch 1 sowie eine Vorschalteinrichtung nach dem Oberbegriff von Patentanspruch 4. Ein solches Verfahren und eine solche Vorschalteinrichtung sind aus der DE 101 47 924 A1 bekannt. Die Erfindung betrifft auch ein Busgerät mit einer Vorschalteinrichtung sowie ein Bussystem mit einem solchen Busgerät.

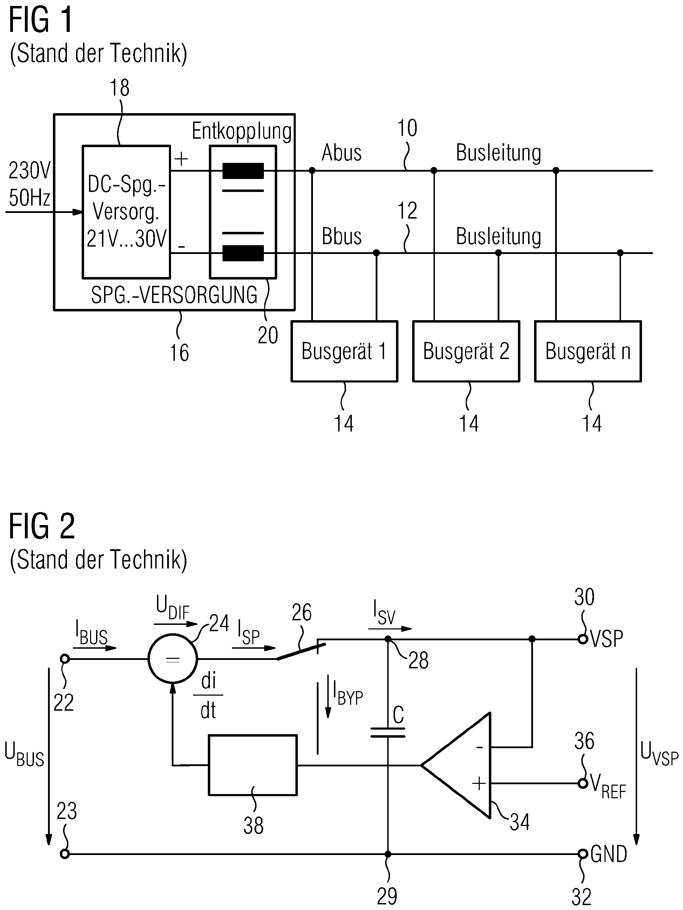

FIG 1 zeigt ein typisches Bussystem, wie es Stand der Technik ist. Es umfasst zwei Busleitungen, nämlich eine erste Busleitung 10 (Abus) und eine zweite Busleitung 12 (Bbus). An der Busleitung angeschlossen sind eine Vielzahl von Busgeräten 14. Exemplarisch gezeigt sind drei Busgeräte (Busgerät 1, Busgerät 2, Busgerät n), wobei diese eine beliebige Zahl n von Busgeräten repräsentieren. n kann sehr groß werden, z. B. die Zahl 256 erreichen.

Es ist in dem Bussystem vorgesehen, über die Busleitung 10 und 12 die Busgeräte 14 gleichzeitig mit Spannung und mit Datensignalen zur Ansteuerung der Busgeräte 14 zu versorgen. Eine Spannungsversorgung 16 empfängt über einen Eingang eine typische Netzspannung von 230 V mit 50 Hz Frequenz und wandelt diese in einer Einheit 18 in eine Gleichspannung von zwischen 21 V und 30 V um. Zwischen der Einheit 18 und der Busleitung 10 und 12 findet eine Entkopplung statt (Einheit 20).

Weil über die Busleitungen 10 und 12 sowohl die von der Spannungsversorgung 18 erzeugte Gleichspannung übertragen wird als auch Datensignale, muss seitens der Busgeräte 14 gewährleistet sein, dass Spannungsversorgung und Datenübertragung sich nicht gegenseitig beeinträchtigen.

Beispielsweise könnte die Datenübertragung durch die Spannungsversorgung in den Busteilnehmern bedämpft werden und dadurch die Übertragungsreichweite abnehmen.

In den Busgeräten gemäß dem Stand der Technik wurde aus diesem Grund ein Eingangsübertrager eingesetzt, der relativ groß und teuer ist und mit einer relativ großen induktiven Belastung einhergeht, die die maximale Anzahl der Busteilnehmer begrenzt.

Ohne einen Eingangsübertrager kommt ein Verfahren und eine Einrichtung zur Spannungsversorgung gemäß der DE 101 47 924 A1 aus.

Die Vorschalteinrichtung aus dieser Druckschrift ist in FIG 2 schematisch dargestellt. Über zwei Eingangsanschlüssen 22 und 23 liegt die Busspannung $U_{BUS}$ an. In Reihe geschaltet befindet sich eine Stromquelle 24, an der eine Spannung $U_{DIF}$ abfällt und ein Schalter 26. Der Strom $I_{BUS}$ wird von der Stromquelle zum Strom $I_{SP}$ gewandelt. Hinter dem Schalter 26 ist ein Knotenpunkt 28 vorgesehen, der mit einem weiteren Knotenpunkt 29 über einen Kondensator C verbunden ist, der somit zu den Eingängen 22 und 23 parallel geschaltet ist. In FIG 2 auf der rechten Seite steht am Ausgang 30 die Gerätespannung $U_{VSP}$ zur Verfügung, und zwar gegen Masse (am Ausgang 32). Die DE 101 47 924 A1 verwendet den Ansatz, dass $U_{VSP}$ nahezu gleich $U_{BUS}$ sein soll. Um die Datenübertragung zu ermöglichen, musste hier eine zusätzliche Lösung gefunden werden. Bei der Datenübertragung sinkt $U_{BUS}$ nämlich um einige Volt ab und könnte daher kleiner werden als $U_{VSP}$. Dann würde der Strom $I_{SP}$ und damit auch $I_{BUS}$ auf Null sinken. Aufgrund dieser schnellen großen Stromänderung wurde die Datenübertragung negativ beeinflusst. Dies steht im Widerspruch dazu, dass eine hohe Anzahl von Busgeräten 14 an den Kommunikationsbus angeschlossen werden soll. Der Schalter 26 schaltet nun während der Datenübertragung und einer entsprechenden Absenkung von $U_{BUS}$ auf eine Abzweigschaltung um, so dass es ermöglicht wird, dass ein Strom $I_{BYP}$ ("Bypass"-Strom) fließt.

Idealerweise wird $I_{BYP}$ so gewählt, dass sich während der Datenübertragung $I_{SP}$ und somit auch $I_{BUS}$ nicht ändert.

Das Umschalten mit Hilfe des Schalters 26 erfolgt typischerweise nur während einer sehr kurzen Zeitdauer, z. B. während 35 μs. Während dieser Zeitdauer kann sich jedoch der Kondensator C entladen. Um den Kondensator nach dem Zurückschalten in die in FIG 2 gezeigte Stellung 26 wieder aufzuladen, muss die Stromquelle 24 den Strom $I_{SP}$ erhöhen. Wenn die Datenübertragung längere Zeit dauert und eine Vielzahl von Signalen übertragen werden, wird $I_{SP}$ dauerhaft erhöht, solange die Datenübertragung andauert. Im zeitlichen Mittel soll $I_{VSP}$ gleich dem Wert von $I_{SP}$ sein, der vor der Datenübertragung floss. Das zeitliche Mittel erstreckt sich über eine Vielzahl von Umschaltvorgängen mit Hilfe des Schalters 26.

Eine Erhöhung des Strom $I_{SP}$ ist auch bei einer Änderung der an den Anschlüssen 30 und 32 anliegenden Last zumindest (eines Verbrauchers) erforderlich. Erhöht sich die Last rapide, kann die Spannung $U_{VSP}$ einbrechen, was durch Erhöhung von $I_{VSP}$ und somit von $I_{SP}$ ausgeglichen werden kann. $I_{BYP}$ wird auch immer dann aktiviert, wenn $U_{VSP}$ so groß wird, dass $I_{SP}$ nicht in $U_{VSP}$ fließen kann, z. B. auch wenn eine Last an $U_{VCP}$ weggeschaltet wird.

Um eine Erhöhung von $I_{SP}$ einzuleiten, ist ein Operationsverstärker 34 vorgesehen. Dessen negativer Eingang ist mit dem Ausgangsanschluss 30 vorgesehen, an dem $U_{VSP}$ anliegt. Der positive Eingang des Operationsverstärkers 34 ist mit einem Anschluss 36 verbunden, an dem eine Referenzspannung $V_{REF}$ anliegt, die üblicherweise eine von $U_{BUS}$ abhängige Spannung ist, z. B. um 2 V kleiner als $U_{BUS}$ ist. Der Ausgang des Operationsverstärkers 34 ist mit Mitteln 38 zum Steuern der Stromquelle 24 verbunden, welche das Ausgangssignal des Operationsverstärkers 34 empfangen und Steuersignale an die Stromquelle 24 geben.

Die Mittel zum Steuern 38 können auch in die Stromquelle 24 integriert sein.

Aus der DE 10 2005 002 753 B4 ist es bekannt, in einer ähnlichen Anordnung zu bewirken, dass die steuerbare Stromquelle den Strom $I_{BUS}$ begrenzt. Bekanntlich kann ein Strom dadurch begrenzt werden, dass ein steuerbarer Transistor verwendet wird. Der vom Kollektor zum Emitter fließende Strom ist dann von der Beaufschlagung der Basis mit Signalen abhängig. Andere Möglichkeiten der Strombegrenzung sind denkbar.

Weiterhin offenbart die US 2004/0201931 A1 ein konfigurierbares Mehrfachenergieversorgungssystem. Schließlich offenbart die WO 2007/130017 A1 ein BUS-Loop-Power-Interface und ein Verfahren.

Bei der Anordnung gemäß FIG 1 muss gewährleistet sein, dass sämtliche Busgeräte 14 auch in Extremfällen mit Strom versorgt werden können. Ein Extremfall liegt dann vor, wenn jedes einzelne der Busgeräte 14 einen maximalen Strom $I_{BUSmax}$ zieht. Die Summe der maximalen Stromstärken $I_{BUSmax}$ zu sämtlichen Busgeräten 14 darf nicht die maximal durch die Spannungsversorgung 16 bereitstellbare Stromstärke überschreiten. Somit bewirkt die Möglichkeit des Ziehens eines sehr hohen Stroms $I_{BUSmax}$ durch die Busgeräte, dass die Gesamtanzahl der Busgeräte klein ist. Je kleiner $I_{BUSmax}$ ist, desto mehr Busgeräte können an den Bus angeschlossen werden.

Es ist Aufgabe der Erfindung, einen Weg aufzuzeigen, wie die Zahl der Busgeräte, die an einem Bus mit vorgegebener Spannungsversorgung anschließbar sind, gesteigert werden kann, ohne dass die Funktionsweise der Busgeräte beeinträchtigt wird.

Die Aufgabe wird durch ein Verfahren gemäß Patentanspruch 1 und eine Vorschalteinrichtung gemäß Patentanspruch 2 gelöst. Erfindungsgemäß werden ferner ein Busgerät mit der erfindungsgemäßen Vorschalteinrichtung sowie ein Bussystem mit solchen Busgeräten bereitgestellt.

Bei dem erfindungsgemäßen Verfahren kann somit von der Stromquelle die jeweils maximale Stromstärke des Busstroms auf einen Wert begrenzt sein, der von der Stromstärke des von der Stromquelle bereitgestellten Stroms und/oder der Stromstärke des über die Ausgänge (Lastanschlüsse) fließenden Stroms und/oder der an den Lastanschlüssen anliegenden Spannung und/oder einer im oder am Busgerät gemessenen Temperatur abhängig ist und/oder der von zumindest einer Zeitableitung dieser Größen abhängig ist.

Die Erfindung beruht auf der Erkenntnis, dass es nicht sinnvoll ist, eine maximale Stromstärke für den Busstrom für sämtliche Situationen vorzugeben, denn dann wird man diese zwangsläufig sehr hoch wählen. Es ist vorteilhafter, die maximale Stromstärke des Busstroms von den gerade vorherrschenden Bedingungen abhängig zu machen. Macht man sie von der Stromstärke des jeweiligen von der Stromquelle bereitgestellten Stromquellenstroms, der Laststromstärke und/oder der Lastspannung bzw. Zeitableitungen derselben abhängig, so kann eine vorgesehene Regelung zuverlässig arbeiten und für einen stabilen Zustand des Gesamtsystems sorgen. Insbesondere werden Überschwinger des Busstroms zuverlässig vermieden.

Die Stromquelle begrenzt die maximale Stromstärke des Busstroms auf die Summe einer Konstanten und einem k-fachen Vielfachen der Stromstärke des Stromquellenstroms, wobei k eine reelle Zahl ist. Durch die Konstante, die auch gleich Null sein kann, wird ein Offset definiert, wegen dem das System stabil läuft, insbesondere bei niedrigen Stromstärken. Durch den zweiten Summanden wird bei k > 1 und k < 2, bewirkt, dass der Busstrom stets höchstens um einen bestimmten Prozentsatz größer als der Stromquellenstrom ist. Das System läuft auch dann stabil weiter. Da Überschwinger im Busstrom vermieden werden, muss das gesamte System nicht so ausgelegt sein, dass derartige Überschwinger aufgefangen werden können. Bei vorgegebener Spannungsversorgung können insgesamt mehr gleiche Busgeräte eingesetzt werden, in denen das erfindungsgemäße Verfahren verwirklicht ist.

Es ist zur gesteuerten Stromquelle auch vorgesehen, wie an sich aus dem Stand der Technik bekannt, dass diese auch die Zeitableitung der Stromstärke begrenzt, also bei Änderungen der Busstromstärke bewirkt, dass diese sich pro Zeiteinheit nicht um Stromstärkenwerte ändert, welche einen Grenzwert übersteigen. Lastsprünge wirken sich dann nicht sofort auf den Busstrom aus. Insbesondere werden so nicht fälschlicherweise Wirkungen von Lastsprüngen als übertragene Informationen interpretiert.

Bei der erfindungsgemäßen Vorschalteinrichtung können Mittel zum Steuern der steuerbaren Stromquelle dazu ausgelegt sein, zu bewirken, dass die Stromquelle den Busstrom auf eine maximale Busstromstärke begrenzt, die zumindest von einer vorbestimmten Größe abhängig ist, die in der Gruppe enthalten ist, welche umfasst:

> a) die Stromstärke eines von der Stromquelle abgegebenen Stroms,
> b) die Stromstärke eines über einen Ausgang (Lastanschluss) fließenden Stroms,
> c) die zwischen den Ausgängen (Lastanschlüssen) anliegende Spannung,
> d) eine im oder am Busgerät herrschende Temperatur,
> e) die erste Zeitableitung
> f) die zweite Zeitableitung und
> g) eine höhere Zeitableitung einer der Größen a) bis d).

Bevorzugt beeinflussen diese Größen nicht indirekt die Mittel zum Steuern, sondern die Mittel zum Steuern empfangen Messwerte zu den Größen. Somit sind bevorzugt Mittel zum Messen der vorbestimmten Größe vorgesehen, welche mit den Mitteln zum Steuern gekoppelt sind (und daher Messsignale an selbige übertragen können).

Als Puffer in der Regelung dient ein Energiespeicher (nämlich insbesondere ein Kondensator), der parallel zu den Lastanschlüssen geschaltet ist.

Nachfolgend wird eine bevorzugte Ausführungsform der Erfindung unter Bezug auf die Zeichnung beschrieben, in der

FIG 1    schematisch ein Bussystem gemäß dem Stand der Technik veranschaulicht;

FIG 2    schematisch eine Vorschalteinrichtung gemäß dem Stand der Technik veranschaulicht;

FIG 3    schematisch eine erfindungsgemäße Vorschalteinrichtung veranschaulicht;

FIG 4    schematisch das zeitliche Verhalten eines über die Eingangsanschlüsse 22 und 23 fließenden Busstroms ohne und mit Einsatz des erfindungsgemäßen Verfahrens in einer bestimmten Situation veranschaulicht.

Die in FIG 2 gezeigte und oben beschriebene Vorschalteinrichtung gemäß dem Stand der Technik, nämlich der DE 101 47 924 A1, wird erfindungsgemäß wie folgt abgewandelt: Es wird eine Stromquelle 40 an der Stelle der bisherigen Stromquelle 24 verwendet, die die Eigenschaft hat, dass sie die Stromstärke des Busstroms $I_{BUS}$ begrenzen kann. Eine Stromquelle mit diesen Eigenschaften ist bereits in der DE 10 2005 002 753 B4 beschrieben. Die bisherigen Mittel 38 zum Steuern werden durch Mittel 42 ersetzt, die nicht mehr ausschließlich eine reine Steuerfunktion haben, sondern regelnd wirken. Um dies zu können, wird neben dem Ausgang des Operationsverstärkers 34 den Mitteln zum Steuern 42 ein Messwert betreffend die Stromstärke des von der Stromquelle 40 weitergegebenen Stromquellenstroms $I_{SP}$, welcher von den symbolisch dargestellten Mitteln 44 zum Messen der Stromstärke gemessen wird, zugeführt. Genauso sind Mittel 46 zum Messen der Stromstärke $I_{VSP}$, also des über die Ausgänge 30 und 32, die als Lastanschlüsse zum Anschließen von Verbrauchern fungieren, fließenden Laststroms vorgesehen, und die Mittel 46 zum Messen der Stromstärke führen ein Messergebnis den Mitteln 42 zum Steuern zu. Schließlich ist außerdem noch ein Temperatursensor 48 vorgesehen, der seine Messwerte den Mitteln 42 zum Steuern zuführt. Die Mittel 42 zum Steuern können die ihnen zugeführten Messwerte auswerten und in Abhängigkeit von selbigen Steuerbefehle an die steuerbare Stromquelle 40 geben, damit diese die Stromstärke des Stroms $I_{BUS}$ unter Berücksichtigung solcher Messwerte begrenzt.

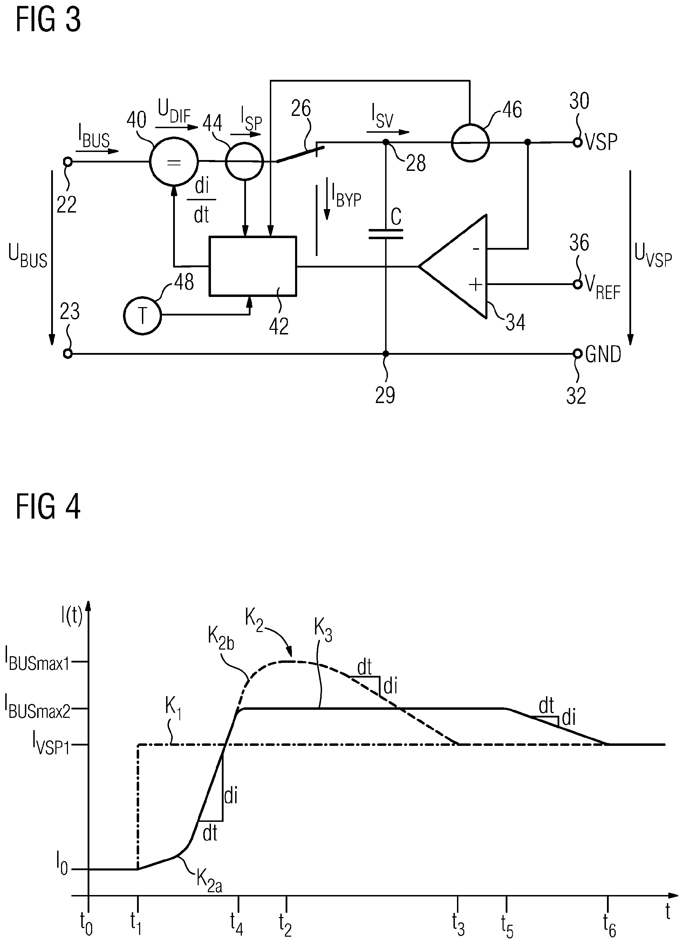

Die Darstellung in FIG 3 ist nur exemplarisch. In der in FIG 3 gezeigten Vorschalteinrichtung sind sämtliche Möglichkeiten, die die vorliegende Erfindung bietet, gleichzeitig und auch parallel nutzbar.

Die Erfindung ist bereits verwirklicht, wenn Mittel 42 zum Ansteuern einer steuerbaren Stromquelle 40 nur von einem der Mittel 44, 46 und 48 zum Messen oder nur dem Operationsverstärker 34 Signale erhalten. In letzterem Falle ist zu beachten, dass anders als bei der Darstellung gemäß FIG 2 eine Stromquelle 40 verwendet wird, die den Strom $I_{BUS}$ begrenzen kann.

Die Vorteile einer Ausführungsform, welche lediglich die Mittel 44 zum Messen der Stromquellenstromstärke $I_{SP}$ benötigt, werden nachfolgend unter Bezug auf FIG 4 beschrieben.

Diese stellt den zeitlichen Verlauf von Stromstärken $I_{VSP}$ und davon abhängig der Stromstärke $I_{BUS}$ dar.

Zum Zeitpunkt $t_0$ soll das System eingeschwungen sein, d. h. es ist wegen des Vorhandenseins der Mittel zum Steuern 42 ein eingeregelter Zustand hergestellt, in dem die Stromstärke $I_{VSP} = I_0$ ist und gleichzeitig $I_{BUS} = I_0$ ist. Mit anderen Worten gibt die steuerbare Stromquelle 40 den Busstrom $I_{BUS}$ mehr oder weniger direkt an die Verbraucher weiter. Zum Zeitpunkt $t_1$ ergibt sich nun entsprechend der gestrichelten Kurve $K_1$ ein Lastsprung, d. h. der Strom $I_{VSP}$ springt spontan vom Wert $I_0$ auf den Wert $I_{VSP1}$. Ohne die erfindungsgemäße Maßnahme folgt nun der Busstrom der Kurve $K_2$.

Die steuerbare Stromquelle 40 begrenzt den

Anstieg der Stromstärke $\dfrac{di}{dt}$. Daher kann der Busstrom

$I_{BUS}$ nicht unmittelbar so steigen wie der Laststrom $I_{VSP}$. Im Kurvenabschnitt $K_{2a}$ steigt der Busstrom $I_{BUS}$ allmählich an. In dieser Phase liegt der Busstrom $I_{BUS}$ unter dem Laststrom $I_{VSP}$. Dies ist deswegen möglich, weil sich der Kondensator C entlädt. Nachdem der Busstrom $I_{BUS}$ genau den Wert $I_{VSP1}$ erreicht, wird der Kondensator C wieder aufgeladen. In dieser Phase steigt gemäß dem Kurvenabschnitt $K_{2b}$ der Busstrom $I_{BUS}$ weiter, bis er den maximalen Wert $I_{BUSmax1}$ erreicht. Nachfolgend verringert sich die Busstromstärke wieder, wobei ihre zeitliche Änderung durch die steuerbare Stromquelle 40 vorgegeben ist. Zum Zeitpunkt $t_3$ stabilisiert sich das System wieder, der Busstrom ist wieder gleich dem Laststrom.

Bei der Erfindung wird nun der maximale Busstrom auf einen Wert $I_{BUSmax2}$ begrenzt, der von dem Wert $I_{VSP1}$ abhängig ist, sich z. B. aus der Formel $I_{BUSmax2} = k \cdot I_{VSP1} + cst$ ergibt. Dann überschreitet zwar der Busstrom $I_{BUS}$ den Laststrom, um den Kondensator C wieder aufzuladen, zum Zeitpunkt $t_4$ beendet aber gemäß der Kurve $K_3$ der Busstrom seinen Anstieg und verweilt bis zum Zeitpunkt $t_5$ auf der maximalen Busstromstärke $I_{BUSmax2}$. Anschließend verringert sich der Busstrom, bis er zum Zeitpunkt $t_6$ wieder gleich dem Laststrom $I_{VSP1}$ ist. Der Zeitpunkt $t_6$ liegt hinter dem Zeitpunkt $t_3$, weil der Busstrom den Kondensator C weniger schnell auflädt.

Die Erfindung ist insbesondere deswegen vorteilhaft, weil zu einem vorbestimmten Busgerät nicht die Möglichkeit bereitgestellt werden muss, dass der Bus

$I_{BUSmax1}$ fließt. Da beim Sprung des Laststroms auf einen Stromwert $I_{VSP1}$ lediglich der Strom $I_{BUSmax2}$ fließen muss, und da dies bei anderen Lastsprüngen in analoger Weise gilt, muss im Bussystem, das wie in FIG 1 gezeigt ausgestaltet ist, die Spannungsversorgung 16 nicht übermäßig groß für eine begrenzte Anzahl von Busgeräten 14 ausgestaltet sein. Im Vergleich zu Busgeräten mit dem Vorschaltgerät in FIG 2 können bei der gleichen Spannungsversorgung 16 mehr Busgeräte an den Bus angeschlossen sein, wenn die Vorschalteinrichtung gemäß FIG 3 und das erfindungsgemäße Verfahren eingesetzt wird.

**Patentansprüche**

1. Verfahren zum Bereitstellen von Strom für Verbraucher in einem Busgerät (14), welches über zwei Eingangsanschlüsse (22, 23) mit einem Bus (10, 12) derart gekoppelt ist, dass das Busgerät (14) gleichzeitig mit Spannung und mit Datensignalen zur Ansteuerung des Busgerätes (14) versorgt wird, wobei einem (22) dieser Eingangsanschlüsse eine steuerbare Stromquelle (40) nachgeordnet ist, die einen Stromquellenstrom ($I_{SP}$) auf einer dem Verbraucher zugeordneten Seite bereitstellt und hierzu von der Seite des Eingangsanschlusses (22) einen Busstrom ($I_{BUS}$) empfängt, wobei ein von dem Stromquellenstrom ($I_{SP}$) und weiteren Elementen nach Art eines parallel zu den Lastanschlüssen (30, 32) geschalteten Energiespeichers (C) abhängiger Laststrom ($I_{VSP}$) über den Verbraucher fließt und hierbei an dem Verbraucher eine Lastspannung ($U_{VSP}$) anliegt,
**dadurch gekennzeichnet, dass**
die Stromquelle (40) bei Änderungen der Busstromstärke ($I_{BUS}$) bewirkt, dass diese sich pro Zeiteinheit nicht um Stromstärkenwerte ändert, welche einen Grenzwert überschreiten, und die Stromquelle (40) die jeweils maximale Stromstärke des Busstroms ($I_{BUS}$) auf einen Wert ($I_{BUSmax2}$) begrenzt, der von der Laststromstärke ($I_{VSP}$) abhängig ist, indem die Stromquelle (40) die maximale Stromstärke ($I_{BUSmax2}$) des Busstroms ($I_{BUS}$) auf die Summe einer Konstanten und einem k-fachen Vielfachen der Stromstärke des Stromquellenstroms ($I_{SP}$) mit k gleich einer reellen Zahl begrenzt, wobei k > 1 und k < 2 ist.

2. Vorschalteinrichtung für ein Busgerät (14), mit zwei Eingangsanschlüssen (22, 23) zum Anschließen des Busgeräts (14) an einem Bus (10, 12), um das Busgerät (14) gleichzeitig mit Spannung und mit Datensignalen zur Ansteuerung des Busgerätes (14) zu versorgen, und mit Lastanschlüssen (30, 32) zum Anschließen zumindest eines elektrischen Verbrauchers, wobei jeder Lastanschluss (30, 32) mit einem Eingangsanschluss (22, 23) gekoppelt ist und parallel zu den Lastanschlüssen (30, 32) ein Energiespeicher (C) geschaltet ist, und wobei in der Verbindung eines ersten (22) der Eingangsanschlüsse mit einem ersten Lastanschluss (30) eine durch Mittel (42) zum Steuern steuerbare Stromquelle (40) angeordnet ist, die dazu ausgelegt ist, einen über den ersten Eingangsanschluss (22) fließenden Busstrom ($I_{BUS}$) zu begrenzen,
**dadurch gekennzeichnet, dass**
die Mittel (42) zum Steuern dazu ausgelegt sind, zu bewirken, dass die Stromquelle (40) bei Änderungen der Busstromstärke ($I_{BUS}$) bewirkt, dass diese sich pro Zeiteinheit nicht um Stromstärkenwerte ändert, welche einen Grenzwert überschreiten, und die Stromquelle den Busstrom ($I_{BUS}$) auf eine maximale Busstromstärke ($I_{BUSmax2}$) begrenzt, die von einem über den ersten Lastanschluss (30) fließenden Strom ($I_{VSP}$) abhängig ist, sodass die Stromquelle (40) die maximale Stromstärke ($I_{BUSmax2}$) des Busstroms ($I_{BUS}$) auf die Summe einer Konstanten und einem k-fachen Vielfachen der Stromstärke des Stromquellenstroms ($I_{SP}$) mit k gleich einer reellen Zahl begrenzt, wobei k > 1 und k < 2 ist.

3. Vorschalteinrichtung nach Anspruch 2 mit Mitteln (44, 46, 48, 34) zum Messen der vorbestimmten Größe, welche mit den Mitteln (42) zum Steuern gekoppelt sind.

4. Busgerät mit einer Vorschalteinrichtung nach einem der Ansprüche 2 bis 3, wobei in dem Busgerät an den Lastanschlüssen (30, 32) zumindest ein elektrischer Verbraucher angeschlossen ist.

5. Bussystem mit einem Bus (10, 12) und einer Mehrzahl von daran angeschlossenen Busgeräten (14), von denen zumindest eines ein Busgerät mit den Merkmalen gemäß Patentanspruch 4 ist, wobei bevorzugt alle Busgeräte eine Vorschalteinrichtung nach einem der Ansprüche 2 bis 3 aufweisen.

**Claims**

1. Method for providing electricity for consumers in a bus device (14) which is coupled via two input terminals (22, 23) to a bus (10, 12), such that the bus device (14) is simultaneously supplied with voltage and with data signals for actuating the bus device (14), wherein a controllable current source (40) is arranged downstream of one (22) of said input terminals and provides a current source current ($I_{SP}$) on a side associated with the consumer and to this end receives a bus current ($I_{BUS}$) from the side of the input terminal (22), wherein a load current ($I_{VSP}$) which is a function of the current source current ($I_{SP}$) and further elements in the manner of an energy store (C) switched in parallel to the load terminals (30, 32), flows via the consumer and a load voltage ($U_{VSP}$) is hereby applied to the consumer, **characterised in that** the current source (40), in the event of changes in the bus current strength ($I_{BUS}$), causes said bus current strength ($I_{BUS}$) not to change per time unit by current strength values which exceed a limit value, and the current source (40) limits the respective maximum current strength of the bus current ($I_{BUS}$) to a value ($I_{BUSmax2}$) which is a function of the load current strength ($I_{VSP}$), **in that** the current source (40) limits the maximum current strength ($I_{BUSmax2}$) of the bus current ($I_{BUS}$) to the total of a constant and a k-fold multiple of the current strength of the current source current ($I_{SP}$), k being equal to a real number, where k > 1 and k < 2.

2. Preswitching device for a bus device (14), having two input terminals (22, 23) for connecting the bus device (14) to a bus (10, 12), in order to supply the bus device (14) simultaneously with voltage and with data signals for actuating the bus device (14), and having load terminals (30, 32) for connecting at least one electrical consumer, wherein each load terminal (30, 32) is coupled to an input terminal (22, 23), and an energy store (C) is switched in parallel to the load terminals (30, 32), and wherein a current source (40) controllable by means (42) for control is arranged in the connection of a first (22) of the input terminals to a first load terminal (30), said current source (40) being designed to limit a bus current ($I_{BUS}$) flowing via the first input terminal (22), **characterised in that** the means (42) for control are designed to cause the current source (40), in the event of changes in the bus current strength ($I_{BUS}$), to cause said bus current strength ($I_{BUS}$) not to change per time unit by current strength values which exceed a limit value, and the current source limits the bus current ($I_{BUS}$) to a maximum bus current strength ($I_{BUSmax2}$) which is a function of a current ($I_{VSP}$) flowing via the first load terminal (30), such that the current source (40) limits the maximum current strength ($I_{BUSmax2}$) of the bus current ($I_{BUS}$) to the total of a constant and a k-fold multiple of the current strength of the current source current ($I_{SP}$), k being equal to a real number, where k > 1 and k < 2.

3. Preswitching device according to claim 2, having means (44, 46, 48, 34) for measuring the predetermined variable, said means (44, 46, 48, 34) being coupled to the means (42) for control.

4. Bus device having a preswitching device according to one of claims 2 to 3, wherein at least one electrical consumer is connected to the load terminals (30, 32) in the bus device.

5. Bus system having a bus (10, 12) and a plurality of bus devices (14) connected thereto, of which at least one is a bus device having the features according to claim 4, wherein preferably all bus devices have a preswitching device according to one of claims 2 to 3.

## Revendications

1. Procédé de préparation de courant pour consommateurs dans un appareil de bus (14) qui est couplé à un bus (10, 12) par deux bornes d'entrée (22, 23) de telle façon que l'appareil de bus (14) est alimenté en même temps en tension et en signaux de données pour piloter l'appareil de bus (14), dans lequel une source de courant (40) pouvant être commandée est attribuée à une (22) de ces bornes d'entrée, qui fournit un courant de source de courant ($I_{SP}$) sur un côté correspondant à l'utilisateur et reçoit pour cela un courant de bus ($I_{BUS}$) du côté de la borne d'entrée (22), dans lequel un courant de charge ($I_{VSP}$) dépendant du courant de source de courant ($I_{SP}$) et d'autres éléments du type d'un accumulateur d'énergie (C) monté en parallèle aux bornes de charge (30, 32) circule par le consommateur et ajuste ainsi une tension de charge ($U_{VSP}$) au consommateur, **caractérisé en ce que** la source de courant (40), en cas de modifications de l'intensité du courant de bus ($I_{BUS}$) fait en sorte que celui-ci ne se modifie pas en valeurs d'intensité de courant par unité de temps qui dépassent une valeur limite, et la source de courant (40) limite l'intensité du courant maximale respective du courant de bus ($I_{BUS}$) à une valeur ($I_{BUSmax2}$) qui dépend de l'intensité de courant de charge ($I_{VSP}$), la source de courant (40) limitant l'intensité du courant maximale ($I_{BUSmax2}$) du courant de bus ($I_{BUS}$) à la somme d'une constante et d'un multiple de k de l'intensité du courant de source de courant ($I_{SP}$) avec k étant égal à un chiffre réel, dans lequel k > 1 et k < 2.

2. Dispositif de montage en série pour un appareil de bus (14) comprenant deux bornes d'entrée (22, 23) pour connecter l'appareil de bus (14) à un bus (10, 12) pour alimenter l'appareil de bus (14) en même temps en tension et en signaux de données pour piloter l'appareil de bus (14), et comprenant des bornes de charge (30, 32) pour raccorder au moins un consommateur électrique, dans lequel chaque borne de charge (30, 32) est couplée à une borne d'entrée (22, 23) et un accumulateur d'énergie (C) est monté en parallèle aux bornes de charge (30, 32), et dans lequel une source de courant (40) pouvant être commandée par des moyens (42) pour commander est disposée dans la liaison d'une première (22) des bornes d'entrée à une première borne de charge (30), qui est conçue pour limiter un courant de bus ($I_{BUS}$) circulant par la première borne d'entrée (22),

**caractérisé en ce que**

les moyens (42) pour commander sont conçus pour faire en sorte que la source de courant (40), en cas de modifications de l'intensité du courant de bus ($I_{BUS}$) fasse en sorte que celui-ci ne se modifie pas en valeurs d'intensité de courant par unité de temps qui dépassent une valeur limite, et la source de courant (40) limite le courant de bus ($I_{BUS}$) à une intensité du courant maximale ($I_{BUSmax2}$) respective qui dépend d'un courant ($I_{VSP}$) circulant par la première borne de charge (30), de sorte que la source de courant (40) limite l'intensité de courant maximale ($I_{BUSmax2}$) du courant de bus (IBUS) à la somme d'une constante et d'un multiple de k de l'intensité du courant de source de courant ($I_{SP}$) avec k étant égal à un chiffre réel, dans lequel k > 1 et k < 2.

3.  Dispositif de montage en série selon la revendication 2 comprenant des moyens (44, 46, 48, 34) pour mesurer la grandeur prédéterminée qui est couplée aux moyens (42) pour commander.

4.  Appareil de bus comprenant un dispositif de montage en série selon l'une des revendications 2 à 3, dans lequel au moins un consommateur électrique est raccordé aux bornes de charge (30, 32) dans l'appareil de bus.

5.  Système de bus comprenant un bus (10, 12) et une pluralité d'appareils de bus (14) raccordés à celui-ci, desquels au moins un est un appareil de bus comprenant les attributs selon la revendication de brevet 4, dans lequel de préférence tous les appareils de bus présentent un dispositif de montage en série selon l'une des revendications 2 à 3.

# FIG 1
(Stand der Technik)

230V
50Hz

18

DC-Spg.-
Versorg.
21V...30V

Entkopplung

+

−

SPG.-VERSORGUNG

16

20

Abus

Bbus

10

12

Busleitung

Busleitung

Busgerät 1

Busgerät 2

Busgerät n

14

14

14

# FIG 2
(Stand der Technik)

$I_{BUS}$

$U_{DIF}$

24

$I_{SP}$

26

$I_{SV}$

30

VSP

28

22

$U_{BUS}$

$\frac{di}{dt}$

$I_{BYP}$

C

−

+

34

36

$V_{REF}$

$U_{VSP}$

23

38

29

32

GND

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10147924 A1
- DE 102005002753 B4
- US 20040201931 A1
- WO 2007130017 A1